(19) Europäisches Patentamt
European Patent Office
Office européen des brevets

(11) EP 1 087 452 A2

(12) # EUROPÄISCHE PATENTANMELDUNG

(43) Veröffentlichungstag:
**28.03.2001 Patentblatt 2001/13**

(51) Int. Cl.[7]: **H01M 4/52**, H01M 4/50

(21) Anmeldenummer: **00119969.4**

(22) Anmeldetag: **14.09.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **25.09.1999 DE 19946066**

(71) Anmelder: **MERCK PATENT GmbH**
**64293 Darmstadt (DE)**

(72) Erfinder:
- **Oesten, Ruediger Dr.**
  **64331 Weiterstadt (DE)**
- **Heider, Udo Dr.**
  **64560 Riedstadt (DE)**
- **Lotz, Natascha**
  **64390 Erzhausen (DE)**
- **Taubert, Ilona**
  **64319 Pfungstadt (DE)**
- **Kühner, Andreas Dr.**
  **64289 Darmstadt (DE)**

(54) **Beschichtete Lithium-Mischoxid-Partikel und deren Verwendung II**

(57) Die Erfindung betrifft mit Polymer beschichtete Lithium-Mischoxid-Partikel zur Verbesserung der Eigenschaften elektrochemischer Zellen.



Printed by Xerox (UK) Business Services
2.16.7 (HRS)/3.6

## Beschreibung

Die Erfindung betrifft beschichtete Lithium-Mischoxid-Partikel zur Verbesserung der Eigenschaften elektrochemischer Zellen, insbesondere bei erhöhten Temperaturen.

Der Bedarf an wiederaufladbaren Lithium-Batterien ist hoch und wird in Zukunft noch sehr viel starker ansteigen. Die Gründe hierfür sind die hohe erzielbare Energiedichte und das geringe Gewicht dieser Batterien. Anwendung finden diese Batterien in Mobiltelefonen, tragbaren Videokameras, Laptops etc.

Der Einsatz von metallischem Lithium als Anodenmaterial führt bekanntermaßen wegen der Dentritenbildung beim Auflösen und Abscheiden des Lithiums zu einer ungenügenden Zyklenfestigkeit der Batterie und zu einem erheblichen Sicherheitsrisiko (interner Kurzschluß) (J. Power Sources, 54 (1995) 151).

Die Lösung dieser Probleme geschah durch Ersatz der Lithiummetall-Anode durch andere Verbindungen, die reversibel Lithiumionen interkalieren können. Das Funktionsprinzip der Lithium-Ionen-Batterie beruht darauf, daß sowohl die Kathoden- als auch die Anodenmaterialien Lithiumionen reversibel interkalieren können. D. h. beim Laden wandern die Lithiumionen aus der Kathode, diffundieren durch den Elektrolyten und werden in der Anode interkaliert. Beim Entladen läuft derselbe Prozeß in umgekehrter Richtung ab. Aufgrund dieser Funktionsweise werden diese Batterien auch „Rocking-chair" oder Lithium-Ionen-Batterien genannt.

Die resultierende Spannung einer solchen Zelle wird bestimmt durch die Lithium-Interkalationspotentiale der Elektroden. Um eine möglichst hohe Spannung zu erreichen, muß man Kathodenmaterialien, die Lithiumionen bei sehr hohen Potentialen und Anodenmaterialien, die Lithiumionen bei sehr niedrigen Potentialen (vs. $Li/Li^+$) interkalieren, verwenden. Kathodenmaterialien, die diesen Anforderungen genügen, sind $LiCoO_2$ und $LiNiO_2$, welche eine Schichtstruktur aufweisen, und $LiMn_2O_4$, welches eine kubische Raumnetzstruktur besitzt. Diese Verbindungen deinterkalieren Lithiumionen bei Potentialen um 4V (vs $Li/Li^+$). Bei den Anodenverbindungen erfüllen bestimmte Kohlenstoff-Verbindungen wie z. B. Graphit die Anforderung eines niedrigen Potentials und einer hohen Kapazität.

Anfang der neunziger Jahre brachte die Firma Sony eine Lithium-Ionen-Batterie auf den Markt, die aus einer Lithiumcobaltoxid-Kathode, einem nichtwäßrigem flüssigen Elektrolyten und einer Kohlenstoff-Anode besteht (Progr. Batteries Solar Cells, 9 (1990) 20).

Für 4V-Kathoden werden $LiCoO_2$, $LiNiO_2$ und $LiMn_2O_4$ diskutiert und eingesetzt. Als Elektrolyt werden Mischungen verwendet, die neben einem Leitsalz noch aprotische Lösungsmittel enthalten. Die am häufigsten verwendeten Lösungsmittel sind Ethylenkarbonat (EC), Propylenkarbonat (PC), Dimethylkarbonat (DMC), Diethylkarbonat (DEC) und Ethylmethylkarbonat (EMC). Obwohl eine ganze Reihe von Leitsalzen diskutiert werden, wird fast ausnahmslos $LiPF_6$ verwendet. Als Anode dient in der Regel Graphit.

Ein Nachteil der state-of-art Batterien ist, daß die Hochtemperaturlagerfähigkeit und -zyklisierbarkeit schlecht ist. Die Gründe hierfür sind neben dem Elektrolyten die verwendeten Kathodenmaterialien, insbesondere der Lithium-Mangan-Spinell $LiMn_2O_4$.

Der Lithium Mangan Spinell ist jedoch als Kathode ist für Gerätebatterien ein vielversprechendes Material. Der Vorteil gegenüber $LiNiO_2$-und $LiCoO_2$-basierten Kathoden ist die verbesserte Sicherheit im geladenen Zustand, die Ungiftigkeit und die geringeren Kosten der Rohmaterialien.

Nachteilig bei dem Spinell sind seine geringere Kapazität und seine ungenügende Hochtemperaturlagerfähigkeit und damit verbunden schlechte Zyklenfestigkeit bei hohen Temperaturen. Als Grund hierfür wird die Löslichkeit des zweiwertigen Mangan im Elektrolyten angesehen (Solid State Ionics 69 (1994) 59; J. Power Sources 66 (1997) 129; J. Electrochem. Soc. 144 (1997) 2178). Im Spinell $LiMn_2O_4$ liegt das Mangan in zwei Oxidationsstufen vor, nämlich drei- und vierwertig. Der $LiPF_6$-haltige Elektrolyt enthält immer auch Verunreinigungen von Wasser. Dieses Wasser reagiert mit dem Leitsalz $LiPF_6$ unter Bildung von LiF und sauren Komponenten, z.B. HF. Diese sauren Komponenten reagieren mit dem dreiwertigen Mangan im Spinell unter Bildung von $Mn^{2+}$ und $Mn^{4+}$

$$\text{(Disproportionierung: } 2Mn^{3+} \rightarrow Mn^{2+} + Mn^{4+}\text{).}$$

Diese Degradation findet auch schon bei Raumtemperatur statt, beschleunigt sich aber mit zunehmender Temperatur.

Eine Möglichkeit, die Stabilität des Spinells bei hohen Temperaturen zu erhöhen, besteht darin, ihn zu dotieren. Beispielsweise kann man einen Teil der Manganionen durch andere, beispielsweise dreiwertige, Metallkationen ersetzen. Antonini et al. berichten, daß Spinelle, die mit Gallium und Chrom dotiert sind (beispielsweise $Li_{1.02}Ga_{0.025}Cr_{0.025}Mn_{1.95}O_4$) bei 55°C eine befriedigende Lager- und Zyklenstabilität zeigen (J. Electrochem. Soc, 145 (1998) 2726).

Einen ähnlichen Weg beschreiten die Forscher von Bellcore Inc. Sie ersetzen einen Teil des Mangans durch Aluminium und zusätzlich einen Teil der Sauerstoffionen durch Fluoridionen $((Li_{1+x}Al_yMn_{2-x-y})O_{4-z}F_z)$. Auch diese Dotierung führt zu einer Verbesserung der Zyklenstabilität bei 55°C (WO 9856057).

Ebenso wird der Einsatz geeigneter Bindermaterialien diskutiert. In US 5468571 wird ein Polyimid als Binder vorgeschlagen und in US 5888672 eine Batterie die amorphe thermoplastische Polyimide enthält.

Ein anderer Lösungsansatz besteht darin, die Oberfläche des Kathodenmaterials zu modifizieren,

d. h. zu beschichten. Die Beschichtung kann sowohl mit anorganischen als auch organischen Materialien durchgeführt werden. Diese Beschichtung der Elektroden führt zur Verbesserung verschiedener Eigenschaften von Lithium Ionen Batterien.

Man kann die Kathodenpartikel beispielsweise mit einer Lithiumborat-Glas-Schicht überziehen (Solid State Ionics 104 (1997) 13). Hierfür wird ein Spinell in eine methanolische Lösung von $H_3BO_3$, $LiBO_2$*8$H_2$0 und LiOH*$H_2O$ gegeben und bei 50-80°C gerührt, bis das Lösungsmittel vollständig verdampft ist. Anschließend wird das Pulver auf 600-800°C erhitzt, um die Umsetzung in das Borat zu gewährleisten. Die Lagerfähigkeit bei hohen Temperaturen wird dadurch verbessert. Eine verbesserte Zyklenfestigkeit wurde jedoch nicht gefunden.

Man kann auch die Kathode und/oder Anode in der Weise beschichten, daß auf den Stromableiter das Aktivmaterial zusammen mit Binder und einem leitfähigen Material aufpastiert wird. Anschließend wird eine Paste, bestehend aus dem Beschichtungsmaterial, Binder und/oder Lösungsmittel auf die Elektrode aufgebracht. Als Beschichtungsmaterialien werden anorganische und oder organische Materialien, die leitfähig sein können, benannt, z. B. $Al_2O_3$, Nickel, Graphite, LiF, PVDF etc. Lithium-Ionen-Batterien, die solcherart beschichtete Elektroden enthalten, zeigen hohe Spannungen und Kapazitäten sowie eine verbesserte Sicherheitscharakteristik (EP 836238).

Bei der Beschichtung mit organischen Materialien werden häufig Polymere verwendet.

Beispielsweise wird in JP 07296847 die Kathode und/oder Anode mit Fluoropolymeren beschichtet. Die Beschichtung erfolgt in der Weise, daß die fertigen Elektroden in eine 1% Fluoropolymerlösung eingetaucht werden. Die in dieser Weise beschichteten Elektroden verhindern Kurzschlüsse in der Batterie und verbessern daher die Sicherheit.

In JP 08138649 werden die Kathoden teilweise mit einem elektrolytisch oxidiertem Film beschichtet. Der Film besteht aus einem Polymer, beispielsweise Polyanilin, Polypyrrol, Polythiophen und abgeleiteten Verbindungen.

In JP 08064203 werden die Elektroden mit einem leitfähigem Polymer beschichtet, beispielsweise Polyanilin. In JP 08148183 werden die Elektrodenbänder ebenfalls mit einem leitfähigen Polymer überzogen.

In EP 517070 werden die Kathoden mit einem leitfähigem Polymer, beispielsweise Polyacetylen, Polyanilin oder Polypyrrol dotiert mit X-Anionen, beschichtet.

Aber es wird nicht nur mit Polymeren beschichtet. Beispielsweise wird in US 5869208 eine Elektrodenpaste (Kathodenmaterial: Lithium Mangan Spinell) hergestellt und auf den Stromableiter aufgebracht. Dann wird die Schutzschicht, bestehend aus einem Metalloxid und Binder, auf die Elektrode aufpastiert. Verwendete Metalloxide sind beispielsweise Aluminiumoxid, Titanoxid und Zirkonoxid.

In JP 08250120 erfolgt die Beschichtung mit Sulfiden, Seleniden und Telluriden zur Verbesserung der Zyklen-Performance und in JP 08264183 mit Fluoriden zur Verbesserung der Zyklenlebensdauer.

Aufgabe der vorliegenden Erfindung ist es, Elektrodenmaterialien zur Verfügung zu stellen, die die Nachteile des Standes der Technik nicht besitzen und bei hohen Temperaturen, insbesondere bei Temperaturen oberhalb der Raumtemperatur, verbesserte Lagerfähigkeit und Zyklenfestigkeit aufweisen.

Die erfindungsgemäße Aufgabe wird gelöst durch Lithium-Mischoxid Partikel, welche mit einem Polymer beschichtet sind.

Gegenstand der Erfindung ist auch ein Verfahren zur Beschichtung der Lithium-Mischoxid-Partikel und die Anwendung in elektrochemischen Zellen, Batterien, sekundären Lithiumbatterien und Superkondensatoren.

Die vorliegende Erfindung betrifft undotierte und dotierte Mischoxide als Kathodenmaterialien ausgewählt aus der Gruppe $Li(MnMe_z)_2O_4$, $Li(CoMe_z)O_2$, $Li(Ni_{1-x-y}Co_xMe_y)O_2$, wobei Me mindestens ein Metallkation aus den Gruppen IIa, IIIa, IVa, IIb, IIIb, IVb, VIb, VIIb, VIII des Periodensystems bedeutet. Besonders geeignete Metallkationen sind Kupfer, Silber, Nickel, Magnesium, Zink, Aluminium, Eisen, Cobalt, Chrom, Titan und Zirkon, für die Spinell-Verbindungen auch Lithium. Ebenso betrifft die vorliegende Erfindung andere Lithium-Interkalations und Insertions-Verbindungen die für 4V-Kathoden geeignet sind mit verbesserten Hochtemperatureigenschaften, insbesondere bei Temperaturen oberhalb der Raumtemperatur, deren Herstellung und Verwendung, insbesondere als Kathodenmaterial in elektrochemischen Zellen.

In der vorliegenden Erfindung werden die Lithium-Mischoxid-Partikel, um eine verbesserte Lagerfähigkeit und Zyklisierbarkeit insbesondere bei hohen Temperaturen (oberhalb der Raumtemperatur) zu erhalten, mit Polymeren beschichtet.

Als Polymere für die Beschichtung kommen Verbindungen in Frage, die mindestens eines der folgenden Kriterien erfüllt:

- Säure stabil
- elektrochemisch stabil
- polar
- möglichst basisch, zumindest neutral
- aprotisch

Damit sind z.B. Polyimid, Polyanilin, Polypyrrol, Polythiophen, Polyacetylen, Polyacrylnitril, carbonisiertes Polyacrylnitril, Poly-p-phenylen, Polyphenylenvinylen, Polyquinolin, Polyquinoxaline, Polyphtalocyaninsiloxan, Polyvinylidenfluorid, Polytetrafluorethylen, Polyethylmetacrylat, Polymethylmetacrylat, Polyamide, Copolymere mit Vinylethern, Cellulose, Polyfluorethylen, Polyvinylalkohol und Polyvinylpyridin sowie deren Derivate geeignete Polymere.

Es wurde gefunden, daß es durch die Beschichtung der Lithium-Mischoxid-Partikel zu einer deutlichen Verbesserung der Hochtemperaturzyklenstabilität der daraus gefertigten Kathoden kommt. Dies führt zur Reduzierung des Kapazitätsverlustes pro Zyklus des beschichteten Kathodenmaterials gegenüber unbeschichteten Kathodenmaterialien.

Desweiteren wurde gefunden, daß die Beschichtung der einzelnen Partikel gegenüber der Beschichtung der Elektrodenbänder einige Vorteile hat. Bei Beschädigung des Elektrodenmaterials kann bei den beschichteten Bändern der Elektrolyt einen großen Teil des aktiven Materials angreifen, während bei der Beschichtung der einzelnen Partikel diese unerwünschten Reaktionen stark lokalisiert bleiben.

Mit dem Beschichtungsverfahren werden Schichtdicken zwischen 0,01 µm und 50 µm erzielt. Bevorzugte Schichtdicken sind zwischen 0,05 µm und 3 µm. Die Lithium-Mischoxid Partikel können ein- oder mehrfach beschichtet werden.

Die beschichteten Lithium-Mischoxid-Partikel können mit den üblichen Träger- und Hilfsstoffen zu 3V- und 4V-Kathoden für elektrochemische Zellen wie Lithium-Ionen-Batterien und Superkondensatoren verarbeitet werden.

Aufgrund der Beschichtung der Materialien ist auch die Verbesserung der Sicherheitsaspekte zu erwarten.

Durch die Beschichtung des Kathodenmaterials mit organischen Materialien (Polymere), werden die unerwünschten Reaktionen des Elektrodenmaterials mit dem Elektrolyten stark gehemmt, und damit eine Verbesserung der Lagerfähigkeit und Zyklenfestigkeit bei höheren Temperaturen erreicht.

Die erfindungsgemäßen Verbindungen können in Elektrolyten mit herkömmlichen Leitsalzen verwendet werden. Geeignet sind z.B. Elektrolyte mit Leitsalzen ausgewählt aus der Gruppe $LiPF_6$, $LiBF_4$, $LiClO_4$, $LiAsF_6$, $LiCF_3SO_3$, $LiN(CF_3SO_2)_2$ oder $LiC(CF_3SO_2)_3$ und deren Mischungen. Die Elektrolyte können auch organische Isocyanate (DE 199 44 603) zur Herabsetzung des Wassergehaltes enthalten. Ebenso können die Elektrolyte organische Alkalisalze (DE 199 10 968) als Additiv enthalten. Geeignet sind Alkaliborate der allgemeinen Formel

$$Li^+ B^-(OR^1)_m(OR^2)_p$$

worin,

m und p 0, 1, 2, 3 oder 4 mit m+p=4 und

$R^1$ und $R^2$ gleich oder verschieden sind, gegebenenfalls durch eine Einfach- oder Doppelbindung direkt miteinander verbunden sind,

jeweils einzeln oder gemeinsam die Bedeutung eines aromatischen oder aliphatischen Carbon-, Dicarbon- oder Sulfonsäurerestes haben, oder

jeweils einzeln oder gemeinsam die Bedeutung eines aromatischen Rings aus der Gruppe Phenyl, Naphthyl, Anthracenyl oder Phenanthrenyl, der unsubstituiert oder ein- bis vierfach durch A oder Hal substituiert sein kann, haben oder

jeweils einzeln oder gemeinsam die Bedeutung eines heterocyclischen aromatischen Rings aus der Gruppe Pyridyl, Pyrazyl oder Bipyridyl, der unsubstituiert oder ein- bis dreifach durch A oder Hal substituiert sein kann, haben oder

jeweils einzeln oder gemeinsam die Bedeutung einer aromatischen Hydroxysäure aus der Gruppe aromatischer Hydroxy-Carbonsäuren oder aromatischer Hydroxy-Sulfonsäuren, der unsubstituiert oder ein- bis vierfach durch A oder Hal substituiert sein kann,

haben und

Hal F, Cl oder Br und

A Alkyl mit 1 bis 6 C-Atomen, das ein- bis dreifach halogeniert

sein kann, bedeuten. Ebenso geeignet sind Alkalialkoholate (DE 9910968) der allgemeinen Formel

$$Li^+ OR^-$$

worin R

die Bedeutung eines aromatischen oder aliphatischen Carbon-, Dicarbon- oder Sulfonsäurerestes hat, oder

die Bedeutung eines aromatischen Rings aus der Gruppe Phenyl, Naphthyl, Anthracenyl oder Phenanthrenyl, der unsubstituiert oder ein- bis vierfach durch A oder Hal substituiert sein kann, hat oder

die Bedeutung eines heterocyclischen aromatischen Rings aus der Gruppe Pyridyl, Pyrazyl oder Bipyridyl, der unsubstituiert oder ein- bis dreifach durch A oder Hal substituiert sein kann, hat oder

die Bedeutung einer aromatischen Hydroxysäure aus der Gruppe aromatischer Hydroxy-Carbonsäuren oder aromatischer Hydroxy-Sulfonsäuren, der unsubstituiert oder ein- bis vierfach durch A oder Hal substituiert sein kann,

hat und

Hal F, Cl, oder Br,
und

A Alkyl mit 1 bis 6 C-Atomen, das ein- bis dreifach halogeniert sein kann.

Auch Verbindungen der allgemeinen Formel

$$[([R^1(CR^2R^3)_k]_lA_x)_yKt]^+ \ ^-N(CF_3)_2 \quad (I)$$

wobei

Kt N, P, As, Sb, S, Se

A N, P, P(O), O, S, S(O), $SO_2$, As, As(O), Sb, Sb(O)

$R^1$, $R^2$ und $R^3$

gleich oder verschieden

H, Halogen, substituiertes und/oder unsubstituiertes Alkyl $C_nH_{2n+1}$, substituiertes und/oder unsubstituiertes Alkenyl mit 1-18 Kohlenstoffatomen und einer oder mehreren Doppelbindungen, substituiertes und/oder unsubstituiertes Alkinyl mit 1-18 Kohlenstoffatomen und einer oder mehreren Dreifachbindungen, substituiertes und/oder unsubstituiertes Cycloalkyl $C_mH_{2m-1}$, ein- oder mehrfach substituiertes und/oder unsubstituiertes Phenyl, substituiertes und/oder unsubstituiertes Heteroaryl,

A kann in verschiedenen Stellungen in $R^1$, $R^2$ und/oder $R^3$ eingeschlossen sein,

Kt kann in cyclischen oder heterocyclischen Ring eingeschlossen sein,

die an Kt gebundenen Gruppen können gleich oder verschieden sein
mit

n 1-18

m 3-7

k 0, 1-6

l 1 oder 2 im Fall von x=1 und 1 im Fall x=0

x 0,1

y 1-4

bedeuten, können enthalten sein (DE 9941566). Das Verfahren zur Herstellung der Verbindungen ist dadurch gekennzeichnet, daß ein Alkalisalz der allgemeinen Formel

$$D^+ \ ^-N(CF_3)_2 \quad (II)$$

mit $D^+$ ausgewählt aus der Gruppe der Alkalimetalle in einem polaren organischen Lösungsmittel mit einem Salz der allgemeinen Formel

$$[([R^1(CR^2R^3)_k]_lA_x)_yKt]^+ \ ^-E \quad (III)$$

wobei

Kt, A, $R^1$, $R^2$, $R^3$, k, l, x und y die oben angegebene Bedeutung haben und

$^-E$ $F^-$, $Cl^-$, $Br^-$, $I^-$, $BF_4^-$, $ClO_4^-$, $AsF_6^-$, $SbF_6^-$ oder $PF_6^-$

bedeutet, umgesetzt wird.

Auch Lithiumkomplexsalze der Formel

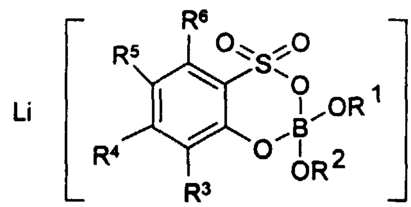

wobei

$R^1$ und $R^2$ gleich oder verschieden sind, gegebenenfalls durch eine Einfach- oder Doppelbildung direkt miteinander verbunden sind, jeweils einzeln oder gemeinsam die Bedeutung eines aromatischen Rings aus der Gruppe Phenyl, Naphthyl, Anthracenyl oder Phenanthrenyl, der unsubstituiert oder ein- bis sechsfach durch Alkyl ($C_1$ bis $C_6$), Alkoxygruppen ($C_1$ bis $C_6$) oder Halogen (F, Cl, Br) substituiert sein kann, haben,

oder jeweils einzeln oder gemeinsam die Bedeutung eines aromatischen heterozyklischen Rings aus der Gruppe Pyridyl, Pyrazyl oder Pyrimidyl, der unsubstituiert oder ein- bis vierfach durch Alkyl ($C_1$ bis $C_6$), Alkoxygruppen ($C_1$ bis $C_6$) oder Halogen (F, Cl, Br) substituiert sein kann, haben,

oder jeweils einzeln oder gemeinsam die Bedeutung eines aromatischen Rings aus der Gruppe Hydroxylbenzoecarboxyl, Hydroxylnaphthalincarboxyl, Hydroxylbenzoesulfonyl und Hydroxylnaphthalinsulfonyl, der unsubstituiert oder ein- bis vierfach durch Alkyl ($C_1$ bis $C_6$), Alkoxygruppen ($C_1$ bis $C_6$) oder Halogen (F, Cl, Br) substituiert sein kann, haben,

$R^3$-$R^6$ können jeweils einzeln oder paarweise, gegebenenfalls durch eine Einfach- oder Doppelbindung direkt miteinander verbunden, folgende Bedeutung haben:

1. Alkyl ($C_1$ bis $C_6$),Alkyloxy ($C_1$ bis $C_6$) oder Halogen (F, Cl, Br)

2. ein aromatischer Ring aus den Gruppen

Phenyl, Naphthyl, Anthracenyl oder Phenanthrenyl, der unsubstituiert oder ein- bis sechsfach durch Alkyl ($C_1$ bis $C_6$), Alkoxygruppen ($C_1$ bis $C_6$) oder Halogen (F, Cl, Br) substituiert sein kann,

Pyridyl, Pyrazyl oder Pyrimidyl, der unsubstituiert oder ein- bis vierfach durch Alkyl ($C_1$ bis $C_6$), Alkoxygruppen ($C_1$ bis $C_6$) oder Halogen (F, Cl, Br) substituiert sein kann,

die über folgendes Verfahren (DE 199 32 317) dargestellt werden

a) 3-, 4-, 5-, 6-substituiertes Phenol in einem geeigneten Lösungsmittel mit Chlorsulfonsäure versetzt wird,
b) das Zwischenprodukt aus a) mit Chlortrimethylsilan umgesetzt, filtriert und fraktioniert destilliert wird,
c) das Zwischenprodukt aus b) mit Lithiumtetramethanolat-borat(1-), in einem geeigneten Lösungsmittel umgesetzt und daraus das Endprodukt isoliert wird, können im Elektrolyten enthalten sein.

Aber auch Elektrolyte enthaltend Verbindungen der allgemeinen Formel (DE 199 53 638)

$$X\text{-}(CYZ)_m\text{-}SO_2N(CR^1R^2R^3)_2$$

mit

X H, F, Cl, $C_nF_{2n+1}$, $C_nF_{2n-1}$, $(SO_2)_kN(CR^1R^2R^3)_2$

Y H, F, Cl

Z H, F, Cl

$R^1$, $R^2$, $R^3$ H und/oder Alkyl, Fluoralkyl, Cycloalkyl

m 0-9 und falls X=H, m≠0

n 1-9

k 0, falls m=0 und k=1, falls m=1-9,

hergestellt durch die Umsetzung von teil- oder perfluorierten Alkysulfonylfluoriden mit Dimethylamin in organischen Lösungsmitteln sowie Komplexsalze der allgemeinen Formel (DE 199 51 804)

$$M^{x+} [EZ]^{y-}_{x/y}$$

worin bedeuten:

x, y 1, 2, 3, 4, 5, 6

$M^{x+}$ ein Metallion

E eine Lewis-Säure, ausgewählt aus der Gruppe $BR^1R^2R^3$, $AlR^1R^2R^3$, $PR^1R^2R^3R^4R^5$, $AsR^1R^2R^3R^4R^5$, $VR^1R^2R^3R^4R^5$,

$R^1$ bis $R^5$ gleich oder verschieden, gegebenenfalls durch eine Einfach- oder Doppelbildung direkt miteinander verbunden sind, jeweils einzeln oder gemeinsam die Bedeutung

eines Halogens (F, Cl, Br),

eines Alkyl- oder Alkoxyrestes ($C_1$ bis $C_8$) der teilweise oder vollständig durch F, Cl, Br substituiert sein kann,

eines, gegebenenfalls über Sauerstoff gebundenen aromatischen Rings aus der Gruppe Phenyl, Naphthyl, Anthracenyl oder Phenanthrenyl, der unsubstituiert oder ein- bis sechsfach durch Alkyl ($C_1$ bis $C_8$) oder F, Cl, Br substituiert sein kann

eines, gegebenenfalls über Sauerstoff gebundenen aromatischen heterocyclischen Rings aus der Gruppe Pyridyl, Pyrazyl oder Pyrimidyl, der unsubstituiert oder ein- bis vierfach durch Alkyl ($C_1$ bis $C_8$) oder F, Cl, Br substituiert sein kann, haben können und
Z $OR^6$, $NR^6R^7$, $CR^6R^7R^8$, $OSO_2R^6$, $N(SO_2R^6)(SO_2R^7)$, $C(SO_2R^6)(SO_2R^7)(SO_2R^8)$, $OCOR^6$, wobei

$R^6$ bis $R^8$ gleich oder verschieden sind, gegebenenfalls durch eine Einfach- oder

Doppelbindung direkt miteinander verbunden sind, jeweils einzeln oder gemeinsam die Bedeutung

eines Wasserstoffs oder die Bedeutung wie $R^1$ bis $R^5$ haben, hergestellt durch Umsetzung von einem entsprechenden Bor- oder Phosphor-Lewis-Säure-Solvenz-Adukt mit einem Lithium- oder Tetraalkylammonium-Imid, -Methanid oder -Triflat, können verwendet werden.

Auch Boratsalze (DE 199 59 722) der allgemeinen Formel

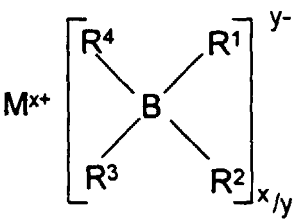

worin bedeuten:

M ein Metallion oder Tetraalkylammoniumion

x,y 1, 2, 3, 4, 5 oder 6

$R^1$ bis $R^4$ gleich oder verschieden, gegebenenfalls durch eine Einfach- oder Doppelbindung direkt miteinander verbundener Alkoxy- oder Carboxyreste ($C_1$-$C_8$) können enthalten sein. Hergestellt werden diese Boratsalze durch Umsetzung von Lithiumtetraalkoholatborat oder einem 1:1 Gemisch aus Lithiumalkoholat mit einem Borsäureester in einem aprotischen Lösungsmittel mit einer geeigneten Hydroxyl- oder Carboxylverbindung im Verhältnis 2:1 oder 4:1.

Die erfindungsgemäßen Verbindungen können auch in Elektrolyte eingesetzt werden, die Lithiumfluoralkylphosphate der allgemeinen Formel (I) enthalten,

$$Li^+[PF_x(C_yF_{2y+1-z}H_z)_{6-x}]^- \quad (I)$$

worin

$1 \leq x \leq 5$

$3 \leq y \leq 8$

$0 \leq z \leq 2y +1$

bedeuten und die Liganden ($C_yF_{2y+1-z}H_z$) gleich oder verschieden sein können, wobei die Verbindungen der allgemeinen Formel (I'),

$$Li^+[PF_a(CH_bF_c(CF_3)_d)_e]^- \quad (I')$$

in der a eine ganze Zahl von 2 bis 5, b = 0 oder 1, c = 0 oder 1, d = 2 und

e eine ganze Zahl von 1 bis 4 bedeuten, mit den Bedingungen, daß b und c nicht gleichzeitig jeweils = 0 bedeuten und die Summe aus a + e gleich 6 ist und die Liganden ($CH_bF_c(CF_3)_d$) gleich oder verschieden sein können, ausgenommen sind (DE 100 089 55). Das Verfahren zur Herstellung von Lithiumfluoralkylphosphaten der allgemeinen Formel (I) ist dadurch gekennzeichnet, daß wenigstens eine Verbindung der allgemeinen Formel

$$H_mP(C_nH_{2n+1})_{3-m} \quad (III),$$

$$OP(C_nH_{2n+1})_3 \quad (IV),$$

$$Cl_mP(C_nH_{2n+1})_{3-m} \quad (V),$$

$$F_mP(C_nH_{2n+1})_{3-m} \quad (VI),$$

$$Cl_oP(C_nH_{2n+1})_{5-o} \quad (VII),$$

$$F_oP(C_nH_{2n+1})_{5-o} \quad (VIII),$$

in denen jeweils

$0 < m < 2$, $3 < n < 8$ und $0 < o < 4$ bedeutet

durch Elektrolyse in Fluorwasserstoff fluoriert wird, das so erhaltene Gemisch der Fluorierungsprodukte durch Extraktion, Phasentrennung und/oder Destillation aufgetrennt wird, und das so erhaltene fluorierte Alkylphosphoran in einem aprotischen Lösungsmittel oder Lösungsmittelgemisch unter Feuchtigkeitsausschluß mit Lithiumfluorid umgesetzt wird, und das so erhaltene Salz der allgemeinen Formel (I) nach den üblichen Methoden gereinigt und isoliert wird.

Die erfindungsgemäßen Verbindungen können auch in Elektrolyten eingesetzt werden, die Salze der Formel

$$Li[P(OR^1)_a(OR^2)_b(OR^3)_c(OR^4)_dF_e]$$

worin $0 < a+b+c+d \leq 5$ und $a+b+c+d+e=6$ gilt, und $R^1$ bis $R^4$ unabhängig voneinander Alkyl-, Aryl- oder Heteroarylreste sind, wobei mindestens zwei von $R^1$ bis $R^4$ durch eine Einfach- oder Doppelbindung direkt miteinander verbunden sein können, enthalten (DE 100 16801). Dargestellt werden die Verbindungen durch

Umsetzung von Phosphor (V)-Verbindungen der allgemeinen Formel

$$P(OR^1)_a(OR^2)_b(OR^3)_c(OR^4)_dF_e$$

worin $0 < a+b+c+d \leq 5$ und $a+b+c+d+e=5$ gilt, und $R^1$ bis $R^4$ die oben angegebenen Bedeutungen haben mit Lithiumfluorid in Gegenwart eines organischen Lösungsmittels.

Die erfindungsgemäßen Verbindungen können in Elektrolyte für elektrochemische Zellen eingesetzt werden, die Anodenmaterial, bestehend aus beschichteten Metallkernen, ausgewählt aus der Gruppe Sb, Bi, Cd, In, Pb, Ga und Zinn oder deren Legierungen, enthalten (DE 100 16 024). Das Verfahren zur Herstellung dieses Anodenmaterials ist dadurch gekennzeichnet, daß

a) eine Suspension oder ein Sol des Metall- oder Legierungskerns in Urotropin hergestellt wird,

b) die Suspension mit Kohlenwasserstoffen mit $C_5$-$C_{12}$ emulgiert werden,

c) die Emulsion auf die Metall- oder Legierungskerne aufgefällt werden und

d) durch Temperung des Systems die Metallhydroxide bzw. - oxihydroxide in das entsprechende Oxid übergeführt werden. Nachfolgend wird ein allgemeines Beispiel der Erfindung erläutert.

Verfahren zur Beschichtung von Kathodenmaterialien

4 V-Kathodenmaterialien, insbesondere Materialien mit Schichtstruktur (z.B. $Li(CoMe_z)O_2$ oder $Li(Ni_{1-x-y}Co_xMe_y)O_2$) und Spinelle (z.B. $Li(MnMe_z)_2O_4$), werden in ein Gefäß gegeben, welches das in einem geeigneten Lösungsmittel gelöste Polymer enthält. Diese Suspension wird zwischen 1 - 10 Stunden bei Temperaturen von 10 - 100°C gerührt. Anschließend wird die Lösung entfernt und das Pulver bei Temperaturen von 60 - 200°C getrocknet

Als Polymere sind geeignet: Polyimid, Polyanilin, Polypyrrol, Polythiophen, Polyacetylen, Polyacrylnitrll, carbonisiertes Polyacrylnitril, Poly-p-phenylen, Polyphenylenvinylen, Polyquinolin, Polyquinoxaline, Polyphtalocyaninsiloxan, Polyvinylidenfluorid, Polytetrafluorethylen, Polyethylmetacrylat, Polymethylmetacrylat, Polyamide, Copolymere mit Vinylethern, Cellulose, Polyfluorethylen, Polyvinylalkohol und Polyvinylpyridin sowie deren Derivate.

Als Lösungsmittel dienen prinzipiell alle, die Polymere lösenden, Lösungsmittel, bevorzugt nichtwäßrige Lösungsmittel. Geeignete Lösungsmittel sind z.B. Methylenchlorid, Ethylenchlorid, Chloroform, Tetrachlorethan, Tetrahydrofuran, Dioxan, Acetophenon, Cyclohexanon, $\gamma$-Butyrolacton, Dimethylformamid, Dimethylacetamid, N-Methylpyrrolidon und Carbonate.

Um sicherzustellen, daß das Polymer in der Lösung von der Oberfläche der Pulverpartikel adsorbiert wird, wird die Suspension eine Zeitlang, vorzugsweise zwischen 1 - 10 Stunden, bei einer Temperatur von 10 - 100°C gerührt. Anschließend wird die Lösung entfernt und das erhaltene Pulver getrocknet (Verdampfen des Lösungsmittels).

Die Beschichtung der Partikel kann ein- oder mehrfach durchgeführt werden. Dabei kann, falls gewünscht, die erste Beschichtung mit einem Polymer und die nächste Beschichtung mit einem anderen Polymer erfolgen.

Die nachfolgenden Beispiele sollen die Erfindung näher erläutern, ohne sie jedoch zu beschränken.

<u>Beispiele</u>

<u>Beispiel 1</u>

Verfahren zur Beschichtung von Kathodenmaterialien mit Polymeren

50ml NMP werden in einen 100ml Rundkolben gegeben. Anschließend werden 1g Matrimid5218® zugegeben und unter Rühren gelöst. Dann werden 10g Lithium-Mangan-Spinell, SP30 Selectipur® der Firma Merck, zugegeben. Die entstehende Suspension wird ca. 1,5 Stunden bei Raumtemperatur gerührt. Die Suspension wird über einen Weißbandfilter abgesaugt und im Trockenschrank bei Temperaturen von 60° - 150°C zur Massenkonstanz getrocknet.

<u>Beispiel 2:</u>

Zyklisieren bei hohen Temperaturen

Das nach Beispiel 1 hergestellte, beschichtete Kathodenpulver, und als Vergleich ein unbeschichtetes Material SP30 Selectipur® von Merck, werden bei 60°C zyklisiert.

Zur Elektrodenherstellung wird das Kathodenpulver mit 15% Leitruß und 5% PVDF (Bindermaterial) und NMP gut vermischt. Die so hergestellte Paste wird auf ein VA-Stahl-Netz, welches als Stromableiter dient, aufgetragen und über Nacht bei 175°C unter Argonatmosphäre und vermindertem Druck getrocknet. Die getrocknete Elektrode wird in der mit Argon gespülten Glove-Box eingeschleust und die Meßzelle eingebaut. Als Gegen- und Referenzelektrode dient Lithiummetall. Als Elektrolyt wird LP 30 Selectipur® von Merck verwendet (1M $LiPF_6$ in EC:EMC 50:50 Gew.-%). Die Meßzelle mit den Elektroden und dem Elektrolyt wird in einen Stahlbehälter gestellt, der gasdicht verschlossen wird. Die so hergestellte Zelle wird aus der Glove-Box ausgeschleust und in einen Klimaschrank gestellt, der auf 60°C eingestellt wird. Nach Anschluß

der Meßzelle an einen Potentiostaten/Galvanostaten wird die Elektrode gezykelt (Laden: 5 Stunden, Entladen: 5 Stunden).

Das Ergebnis ist, daß die Zyklenstabilität des unbeschichteten Spinells geringer als die des beschichteten ist.

In den ersten 5 Zyklen laufen irreversible Reaktionen wie zum Beispiel Filmbildung auf Kathode und Anode ab, so daß sie für die Berechnung nicht herangezogen werden. Der Kapazitätsverlust pro Zyklus des unbeschichteten Spinells ist dann 0,78 mAh/g, während des Polymer-beschichteten Spinell nur 0,55 mAh/g pro Zyklus verliert. Der Kapazitätsverlust pro Zyklus reduziert sich um etwa ein Drittel. Dies zeigt, daß die Hochtemperaturzyklenstabilität der Kathodenpulver durch Beschichtung mit Polymeren deutlich verbessert ist.

**Patentansprüche**

1. Lithium-Mischoxid-Partikel, dadurch gekennzeichnet, daß diese mit einem oder mehreren Polymeren beschichtet sind.

2. Lithium-Mischoxid-Partikel nach Anspruch 1, dadurch gekennzeichnet, daß die Partikel aus der Gruppe $Li(MnMe_z)_2O_4$, $Li(CoMe_z)O_2$, $Li(Ni_{1-x-y}Co_x Me_z)O_2$ und andere Lithium-Interkalations und Insertions-Verbindungen ausgewählt sind.

3. Lithium-Mischoxid-Partikel nach Anspruch 1 oder 2, dadurch gekennzeichnet, daß die Polymere Säure stabil, elektrochemisch stabil, polar, möglichst basisch, zumindest neutral und/oder aprotisch sind.

4. Lithium-Mischoxid-Partikel nach einem der Ansprüche 1 bis 3, dadurch gekennzeichnet, daß die Schichtdicken der Polymere 0,01-50 μm betragen.

5. Lithium-Mischoxid-Partikel nach einem der Ansprüche 1 bis 4, dadurch gekennzeichnet, daß die Schichtdicken der Polymere 0,05-3 μm betragen.

6. Kathoden, im wesentlichen Lithium-Mischoxid-Partikel nach einem der Ansprüche 1 bis 5 und übliche Träger- und Hilfsstoffe enthaltend.

7. Verfahren zur Herstellung von mit einem oder mehreren Polymeren beschichteten Lithium-Mischoxid-Partikeln, dadurch gekennzeichnet, daß die Partikel in einem Lösungsmittel suspendiert werden und danach die beschichteten Partikel abfiltriert, getrocknet und gegebenenfalls calciniert werden.

8. Verfahren zur Herstellung von mit einem oder mehreren Polymeren beschichteten Lithium-Mischoxid-Partikeln, dadurch gekennzeichnet, daß die Polymere aus der Gruppe der Polyimide, Polyaniline, Polypyrrole, Polythiophene, Polyacetylene, Polyacrylnitrile, carbonisierten Polyacrylnitrile, Poly-p-phenylene, Polyphenylenvinylene, Polyquinoline, Polyquinoxaline, Polyphtalocyaninsiloxane, Polyvinylidenfluoride, Polytetrafluorethylene, Polyethylmetacrylate, Polymethylmetacrylate, Polyamide, Copolymeren mit Vinylethern, Cellulose, Polyfluorethylene, Polyvinylalkohole und Polyvinylpyridine sowie deren Derivate ausgewählt sind.

9. Verfahren zur Herstellung von mit einem oder mehreren Polymeren beschichteten Lithium-Mischoxid-Partikeln, dadurch gekennzeichnet, daß das Polymer 5-(6)-Amino-1-(4'aminophenyl)-1,3-trimethylindan ist.

10. Verfahren zur Herstellung von mit einem oder mehreren Polymeren beschichteten Lithium-Mischoxid-Partikeln, dadurch gekennzeichnet, daß die Lösungsmittel Methylenchlorid, Ethylenchlorid, Chloroform, Tetrachlorethan, Tetrahydrofuran, Dioxan, Acetophenon, Cyclohexanon, γ-Butyrolacton, Dimethylformamid, Dimethylacetamid, N-Methylpyrrolidon und/oder Carbonate sind.

11. Verwendung von beschichteten Lithium-Mischoxid-Partikeln nach einem der Ansprüche 1 bis 5 zur Herstellung von Kathoden mit verbesserter Lagerfähigkeit und Zyklenfestigkeit inbesondere bei Temperaturen oberhalb der Raumtemperatur.

12. Verwendung von beschichteten Lithium-Mischoxid-Partikeln nach einem der Ansprüche 1 bis 5 zur Herstellung von 3V- und 4V-Kathoden.

13. Verwendung von beschichteten Lithium-Mischoxid-Partikeln nach einem der Ansprüche 1 bis 4 in Elektroden für elektrochemische Zellen, Superkondensatoren, Batterien und sekundäre Lithiumbatterien.